# EUROPEAN PATENT APPLICATION

(11) **EP 1 745 731 A1**
(43) Date of publication of application: **24.01.2007**
(21) Application number: 05254531.6
(22) Date of filing: 20.07.2005
(51) Int. Cl.: A47J 47/00

(54) **Foldable chopping block**

(71) Applicant: Chen, Kuo-Chang, Hsi Kang Hsiang Tainan Hsien (TW)
(72) Inventor: Chen, Kuo-Chang, Hsi Kang Hsiang Tainan Hsien (TW)
(74) Representative: Jennings, Nigel Robin

(57) **Abstract**

A chopping block (1) includes a board (10). A connection member (20) is defined along the middle of the board (10), whereby the board (10) can be folded. The user can cut food on the board (10), and then fold the board (10) to concentrate the food along an area surrounding the connection member (20) and then tilt the board (10) so that the movement of the food is easily controlled. When the chopping block (1) is not being used, the board (20) can be folded to save storage space.

## Description

### 1. Field of the Invention

The present invention relates to a chopping block, and particularly relates to a chopping block that can be folded to facilitate storage and to easily direct travel of sliced food from the block.

### 2. Description of Related Art

A chopping block serves as a protecting surface when food is cut into pieces thereon, whereby the table will not be damaged by the kitchen knife. Normally a chopping block is made of wood or duroplasts, which can not be folded and will take up too much space. Besides, the user has to use two hands when shifting food off the block, i.e., one hand lifts the board while the other hand has to guide the chopped food off the block and into a receptacle. This can be very difficult and time-consuming. Furthermore, it is common for food items to drop on the floor, causing a waste of money and making extra work due to the need to clean the floor. Furthermore, the spilt food may create a safety problem hazard for those walking in a kitchen which is already very hazardous.

Therefore, the invention provides a foldable chopping block to mitigate or obviate the aforementioned problems.

The main objective of the present invention is to provide a foldable chopping block including a board, and a connection member is defined along the middle of the board, whereby the board can be partially folded to guide travel of cut food into a receptacle. When the chopping block is not being used, it can be fully folded to save storage space.

Other objectives, advantages and novel features of the invention will become more apparent from the following detailed description when taken in conjunction with the accompanying drawings.

IN THE DRAWINGS
Fig. 1 is a perspective view of an expanded chopping block of a first embodiment in accordance with this invention;
Fig. 2 is a front view of the expanded chopping block of the first embodiment in accordance with this invention;
Fig. 3 is a side view of the expanded chopping block of the first embodiment in accordance with this invention;
Fig. 4 is a side view of the fully folded chopping block of the first embodiment in accordance with this invention;
Fig. 5 is a schematic illustration of the partially folded chopping block of the first embodiment when the sliced food is being tipped to one end;
Fig. 6 is a perspective view of the chopping block of the second embodiment in accordance with this invention;
Fig. 7 is a front view of the expanded chopping block of the second embodiment in accordance with this invention; and
Fig. 8 is a side view of the fully folded chopping block of the second embodiment in accordance with this invention.

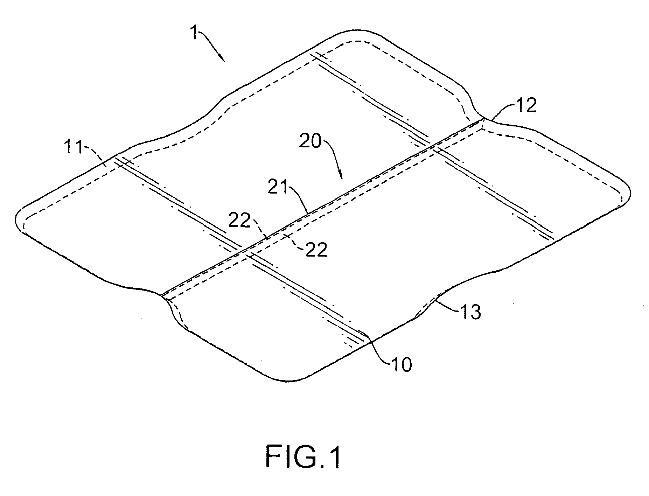

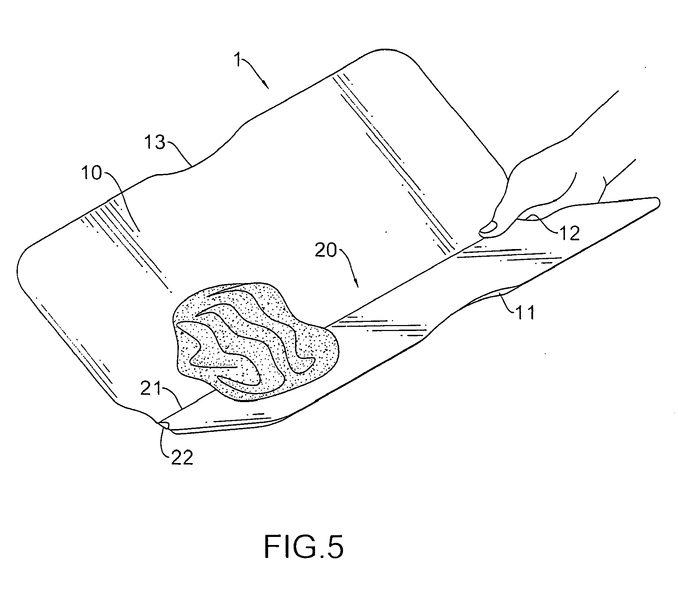

With reference to Figs. 1-4, a chopping block (1) is a rectangular board (10). A connection member (20) is defined from one side of the board (10) to another to bisect the board (10) into substantially equal, linked portions, whereby the two equal, linked portions can be pivoted about the connection member (20), and the board is either extended or folded away. The connection member (20) comprises a notch, two first chamfers (22), and a crease line (21) defined between the two chamfers (22) and at a bottom of the notch. The crease line (21) forms an integral hinge between the portions of the board (10). A second chamfer (11) is formed along an outer periphery of the board (10), whereby the user can comfortably hold the chopping block (1). Two opposed first recesses (12) are respectively defined in the two edges that are perpendicular to the crease line (21), and two opposed second recesses (13) are respectively defined in the two edges that are parallel to the crease line (21) of the crease line (22). The recesses (12, 13) provide convenient grip points for a user to comfortably and securely hold the board.

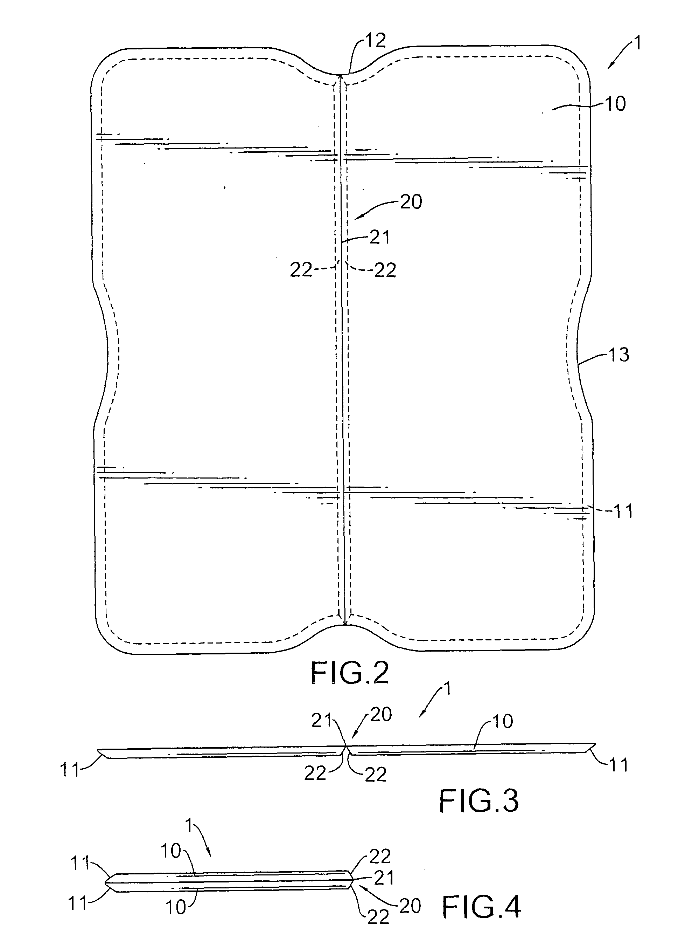

With reference to Fig. 2, 3 and 5, when the board (10) is expanded, and food is cut into small pieces thereon, and then user may hold the board (10) by the recess (12) and partially fold the board (10) to direct the food that is spread over the board to then concentrate along the area surrounding the crease, whereby removal of the food is convenient.

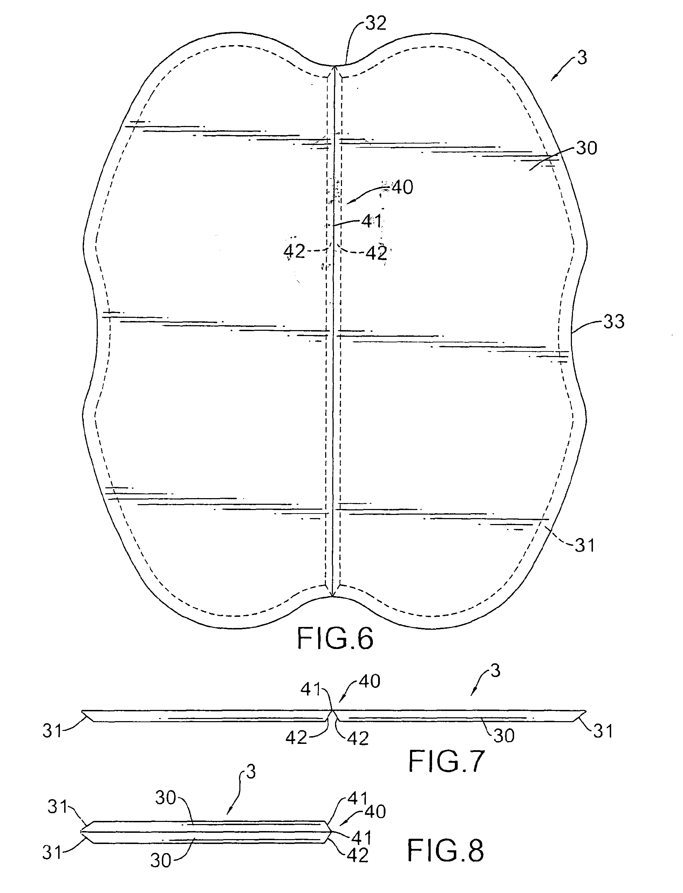

Figs. 6-8 show another embodiment of this invention. A chopping block (3) is a board (30) substantially oval-shaped. A connection member (40) is defined from one side of the board to another to bisect the board (10) into substantially equal, linked portions. The connection member (40) comprises a notch, two first chamfers (42), and a crease line (41) defined between the two chamfers (42). A second chamfer (31) is formed along an outer periphery of the board (30), whereby the user can comfortably hold the chopping block (1). Two opposed first recesses (32) are respectively defined in two opposite edges which are defined in two ends of the crease line (41), and two second recesses (33) are defined in two opposite edges that are at two sides of the crease line (41), which make the block convenient to hold.

The chopping block in accordance with this invention can be folded to concentrate location of the sliced food, whereby the food can be conveniently removed, and the foldable feature also facilitates storage. The recess defined in the board is designed for the user's convenient holding of the block.

## Claims

1. A chopping block (1) comprising a board (10) having a connection member (20) with a crease line (21) defined from a first side of the board to a second side that is opposed to the first side and along the middle of the board (10), whereby the board (10) is foldable; and two first opposed recesses (12) are respectively defined in the first and second sides of the board.

2. The chopping block (1) as claimed in claim 1 wherein the connection member (20) further comprises a notch, and two first chamfers (22).

3. The chopping block (1) as claimed in claim 1 wherein a second chamfer (11) is formed on a periphery of the board (10).

4. The chopping block (1) as claimed in claim 1 wherein two second opposed recesses (13) are respectively defined in two opposed edges of the board and which are parallel to the crease line (22).

5. The chopping block (1) as claimed in claim 2 wherein two second opposed recesses (13) are respectively defined in two opposed edges of the board and which are parallel to the crease line (22).

6. The chopping block (1) as claimed in claim 3 wherein two second opposed recesses (13) are respectively defined in two opposed edges of the board and which are parallel to the crease line (22).
